# EUROPEAN PATENT SPECIFICATION

(11) **EP 1 520 068 B1**
(45) Date of publication and mention of the grant of the patent: **29.07.2009**
(21) Application number: 03762319.6
(22) Date of filing: 30.06.2003
(51) Int. Cl.: D06M 17/04

(54) **PROCESS FOR COATING TO OBTAIN SPECIAL SURFACE EFFECTS**
BESCHICHTUNGSVERFAHREN ZUR ERZIELUNG BESONDERER OBERFLÄCHENEFFEKTE
PROCEDE D'APPLICATION DE REVETEMENT PERMETTANT D'OBTENIR DES EFFETS DE SURFACE SPECIAUX

(30) Priority: 01.07.2002 US 393352 P
(43) Date of publication of application: 06.04.2005
(73) Proprietor: E.I. DU PONT DE NEMOURS AND COMPANY, Wilmington, DE 19898 (US)
(72) Inventor: GOECKE, Stefanie, 58256 Ennepetal (DE); HUTHMACHER, Gerd, 53332 Bornheim (DE)
(74) Representative: DuPont Performance Coatings Biering/Blum/Kimpel
(86) International application number: PCT/US2003/020897
(87) International publication number: WO 2004/003281

(56) References cited:
- EP-A- 0 248 443
- EP-A- 0 712 877
- WO-A-00/50482
- DE-A- 19 835 983

## Description

### Background of the Invention

The invention relates to a process for coating substrates to form surfaces that have a textile-like texture.

In order to produce textile or fiber effects on surfaces, it is known to process fiber materials with binders to produce a composite material, wherein the fibers are incorporated into a matrix. DE-A 199 21 209, for example, describes a thermoplastic composite material that contains organic fibers, in particular leather fibers, and a thermoplastic binder as matrix, wherein polymer films are subsequently produced by appropriate processing methods, which polymer films may themselves be applied onto a substrate surface by a thermoforming process.

Fibers can be mixed with binders in order to form fiber non-woven sheet materials or fiber non-woven mouldings. This is described, for example, in WO 95/30034 and WO 96/16218, wherein organic or inorganic fibers are processed together with a powder binder mixture.

The described processes relate either to the production of polymer films for coating substrates by thermoforming with inclusion of fibrous materials or to the production of cured fiber non-woven sheet materials or fiber non-woven mouldings but not to the production of textile-like surfaces formed by coating substrates.

It is also known to place fibers in a mould and embed them in a moulding by injecting polymers. Special moulds must be used for this purpose; conventional injection moulding moulds cannot be used.

Processes are also known in which non-woven fibers are applied onto surfaces having an adhesive layer and are fixed thereto by curing the adhesive (flocking process). In this process, short chopped textile fibers can be applied onto an adhesive-coated surface using an electrostatic flocking apparatus. Once this surface has dried or cured, a surface having a textile hand is obtained which is relatively insensitive to impact and scratching and exhibits good sliding properties against smooth surfaces. The hand of the flocked surface may be varied by appropriate variation in the length of the individual fibers and the fiber thickness. Usable fibers are, for example, fibers of polyamide, viscose or cotton, polyester and carbon. Application of the non-woven fibers may result in generating dust and consequently give rise to occupational hygiene and environmental problems. Moreover, certain surface effects, for example, the production of specific tactile properties, cannot be achieved by using conventional adhesives.

### Summary of the Invention

This invention provides a process for coating substrate surfaces which overcomes occupational hygiene and environmental problems by simplified processing and furthermore allows the production of improved surface effects by achieving a textile surface finish and a soft-feel effect.

The process for coating substrate surfaces in order to achieve a textile surface comprises the following steps:
a) coating fiber material with a polymer dispersion based on one or more polymers selected from the group of polyurethanes, polyester polyurethanes, polyesters or mixtures thereof,
b) blending the coated fiber material with the polymer dispersion to form a coating material comprising
   1) 5 to 40 wt.% of the polymer dispersion, having a solids content of 25 to 90 wt.%, based on at least one polymer selected from the group consisting of polyurethanes; polyester polyurethanes; polyesters; and mixtures thereof,
   2) 0 to 35 wt.% of at least one cross-linking agent selected from the group consisting of formaldehyde condensation resins and polyisocyanates,
   3) 2 to 20 wt.% of the coated fiber material,
   4) 0 to 20 wt.% of a solvent.
   5) 6 to 35 wt.% of water, and optionally
   6) 0.5 to 10 wt.% of compositions selected from the group consisting of coating additives; pigments; extenders; and mixtures thereof;
c) applying the coating material onto the surface of the substrate; and
d) curing the coating material to form a textured surface on the substrate.

The process according to the invention forms a coating with improved surface properties since a release of the fibers from the coated surface is avoided. By varying the layer thickness of the coating in the manner according to the invention, various optical effects, such as a textile like texture, can be obtained.

### Detailed Description of the Invention

Fibers usable in the invention comprise non-woven, mixed fibers that may consist of known materials, for example, natural, synthetic, organic and inorganic fibers. Examples are glass fibers, rock wool fibers, polyester fibers, acrylic resin fibers, polyolefin fibers, wool fibers, cotton fibers, linen fibers, leather fibers or the like. Textile fibers, in particular cotton fibers, for example, fiber waste from the textiles industry, are preferably used.

The polymer dispersion used in the process according to the invention is based a polyurethane resins, polyester polyurethane resins, polyester resins, or mixtures of these resins; preferably, polyurethane resins are used.

The polymer dispersion used in the invention may, for example, be produced by dispersing or dissolving or mixing the polymer with an organic solvent or water, for example by thorough dispersion of the optionally neutralized polymer with water. The aqueous phase optionally containing neutralizing agent may also initially be introduced and the polymer incorporated by stirring. Continuous processing is also possible, i.e., polymer, water and neutralizing agent are simultaneously homogeneously mixed in known units, such as, for example, a rotor/stator mixer. Conversion into the aqueous phase may also be promoted by using an elevated temperature.

The polyester polyurethane resins and the polyurethane resins may be prepared, for example, by reacting linear or branched polyol components, for example diols, with one or more organic polyisocyanates, preferably diisocyanates using known methods. The polyols comprise polyols familiar to the person skilled in the art, wherein proportions of polyols having a functionality of three or more may be added in order to achieve branching of the polymer. Suitable polyols are, for example, low molecular polyols, e.g., diols, triols, polyols, such as ethylene glycol, propandiol, 1,6-hexandiol, 1,2-cyclohexandiol, bisphenol A and mixtures thereof. Also diols derived from fatty alcohols can be used. Additional examples of polyols may be polyether polyols and polyester polyols. The polyether polyols may, for example, exhibit a general formula of HO-(CHR⁴)ₙ-ₘOH, in which R⁴ is hydrogen, C1 to C6 alkyl, optionally with various substituents, n = 2 to 6 and m = 10 to 50 or more, wherein the residues R⁴ may be identical or different. Polyester polyols may, for example, be produced by esterifying organic dicarboxylic acids or the anhydrides thereof with organic polyols. The dicarboxylic acids and polyols may be aliphatic, cycloaliphatic or aromatic dicarboxylic acids and polyols. The dicarboxylic acids may be long-chain dicarboxylic acids having 18 to 60 chain carbon atoms. The polyesters preferably have a molecular weight of 300 to 6000, an OH value of 20 to 400 and an acid value of <3, preferably of <1. Polycarbonate diols may also be used as polyols, as may polyester polyols derived from lactones. These products are obtained, for example, by reacting an epsilon-caprolactone with a diol, wherein these polylactone polyols are distinguished by the presence of a terminal hydroxyl group and by repeat polyester moieties derived from the lactone. The lactone may be any desired lactone or any desired combination of different lactones, for example having 6 to 8 ring carbon atoms.

Additional compounds that are usable as polyol components are, for example, OH- and/or SH-containing polythioethers, OH-containing polyacetals, polyether-esters, OH-containing polyester-amides and polyamides, dihydroxypolyester carbonates, polyurethane diols, poly(meth)acrylate polyols, polybutanediene oil diols and hydroxy-functionalized siloxane copolymers. Linear polyester polyols and polyether polyols are preferably used.

As organic polyisocyanates, any aliphatic, cycloaliphatic or aromatic as well as sterically hindered isocyanates, which may for example also contain ether or ester groups, may be used, for example, diisocyanates. Polyisocyanates showing a higher isocyanate functionality than those described before, may also be used, e.g., polymeric polyisocyanates. Preferred isocyanates are those containing approximately 3 to approximately 36, particularly approximately 8 to 15 carbon atoms. Examples of suitable diisocyanates are: hexamethylene diisocyanate, toluylene diisocyanate, isophorone diisocyanate, hexane diisocyanate. Oligomeric diisocyanates are preferred.

Examples for polyurethanes and polyester polyurethanes are the Bayhydrole of Bayer AG, e.g. Bayhydrol® LS 2244 and Bayhydrol® LS 2305.

The polyesters may be produced in the conventional manner. Polyesters containing carboxyl groups and those containing hydroxyl groups may be used or polyesters without such functional groups may be used. The amount of carboxyl and hydroxyl groups can be adjusted by an appropriate choice of the kind and the quantitative proportion of the initial components. Polyols used for the production of the polyester are, for example, diols or higher-functional types or mixtures of mono and higher-functional OH-components, such as, trimethylol propane, pentaerythritol, glycerol, polyether polyols. The acid components of the polyester preferably consist of lower-molecular dicarboxylic acids or their anhydrides having 2 to 18 carbon atoms, for example, phthalic acid, terephthalic acid, adipic acid, sebacic acid, maleic acid, itaconic acid, 1,4-cyclohexane dicarboxylic acid. When existing, methylesters also can be used. Apart from the above, also parts of higher-functional carboxylic acids can be used, such as, tri-functional carboxylic acids like, trimellitic acid, dimethylol propionic acid or alkyl-substituted dicarboxylic acids, like butyl isophthalic acid. The average molecular weight Mn of the suitable polyester resins (measured with polystyrene as calibrate substance) is, e.g., in the range of 1000 to 6000.

The various types of compounds may be used alone or as a mixture of two or more thereof.

If the polymers according to the invention contain groups capable of forming ions, said groups are entirely or in part converted into the corresponding salts using a suitable compound, for example, a neutralizing agent, wherein care must be taken to ensure that the compounds used for salt formation are selected such that they are chemically inert during synthesis. Ion-forming groups that may be present are those capable of forming anions. In this case, a base, for example, an amine, preferably a tertiary amine, for example trialkylamine, is used for conversion into anions. If the polymer contains cation-forming groups, one or more acids may preferably be used for ion formation. Suitable acids are, for example, phosphoric acid or acidic phosphoric acid esters or organic carboxylic acids, hydroxycarboxylic acids or dicarboxylic acids. Mixtures of the acids may also be used. Groups capable of anion formation are, for example, carboxyl, phosphoric acid, sulfonic acid groups. Basic groups convertible into cations that may be considered are, for example, primary, secondary and tertiary amino groups or onium groups, such as quaternary ammonium, phosphonium and/or tertiary sulfonium groups.

The polymer usable according to the invention may be used dissolved or mixed in a solvent. Solvents that may be used are water-miscible solvents or water-immiscible solvents. Examples of suitable solvents are mono- or polyhydric alcohols, glycol ethers or esters, glycols, ketones, aromatic or aliphatic hydrocarbons, alkylpyrrolidones, ethers, and cyclic urea derivatives.

The solvent-free or solvent-containing polymer composition according to the invention may be converted into the aqueous phase by addition of sufficient quantities of water. A finely divided binder composition is then obtained having an average particle size of, for example, >10 and <2000 nm, preferably above 50 and below 500 nm. The solids content is between 25 and 90 wt.%, preferably above 35 to 60 wt.%.

It is not generally necessary to use emulsifiers to convert the polymers in the invention into aqueous dispersions, but emulsifiers may nevertheless be used. Examples of emulsifiers are ionic or nonionic emulsifiers that facilitate emulsification and optionally, reduce the number of ionizable groups.

Solvents optionally present in the polymer composition according to the invention may, if desired, be removed by distillation, for example under reduced pressure.

The polymer dispersions may be self-cured / physically dried or externally cross-linked.

The polymer dispersions may contain cross-linking agents, pigments, additional binders and additives optionally together with quantities of solvents.

Various cross-linking agents may be used, such as, for example, formaldehyde condensation resins, such as phenol/formaldehyde condensation resins and amine/formaldehyde condensation resins, as well as blocked polyisocyanates. Amino resins suitable as cross-linking agents are, for example, alkylated condensation products that are produced by reacting aminotriazines and amidotriazines with aldehyde. Examples of such resins and the production thereof are described in Houben-Weyl, Methoden der organischen Chemie, 663, page 355. Blocked polyisocyanates may also be used as cross-linking agents. These may be any desired polyisocyanates in which the isocyanate groups have been reacted with a compound in such a manner that the resultant blocked polyisocyanate is resistant to hydroxyl groups and water at room temperature, but reacts at elevated temperatures, for example, in the range from approximately 90 to approximately 250°C. It is also possible to use unblocked polyisocyanates. Aliphatic, cycloaliphatic or aromatic as well as sterically hindered isocyanates may be used, as may also polyisocyanates, for example, diisocyanates, comprising ether or ester groups. Preferred isocyanates are those which contain approximately 3 to approximately 36, in particular, approximately 8 to 15 carbon atoms. Examples of suitable diisocyanates are hexamethylene diisocyanate, tolylene diisocyanate, isophorone diisocyanate, hexane diisocyanate. Oligomeric diisocyanates are preferred. Polyisocyanates of greater isocyanate functionality than those described above, for example polymeric polyisocyanates, may also be used.

The cross-linking agents may be used individually or as a mixture.

The polymer dispersion according to the invention may also contain one or more additional binders. This may be advantageous, for example, in order to achieve certain synergistic effects. Examples of additional binders are the conventional film-forming resins familiar to the person skilled in the art, such as, for example, polyacrylate resins and/or other polyurethane resins. The resins may be reactive or non-functional.

The polyacrylates may contain free carboxyl groups and may be, for example acrylic or methacrylic copolymers. The quantity of added resins may amount to 0 to 50 wt.%, preferably 0 to 25 wt.%, of the entire resin solids content. The term "resin solids content" means the sum of all binders without the cross-linking agent content.

The polymer dispersion used according to the invention may contain additives, for example, rheological agents, thickeners, antisettling agents, levelling agents, light stabilizers, antifoaming agents, wetting agents and coupling substances.

Catalysts may optionally be used to accelerate curing. It is, however, also possible to cure with thermal energy without using a catalyst.

Suitable solvents that may be present are conventional coating solvents, which may originate from production of the binders or are added separately. Examples of such solvents are mono- or polyhydric alcohols, glycol ethers or esters, glycols, ketones, aromatic or aliphatic hydrocarbons, alkylpyrrolidones, ethers, and cyclic urea derivatives. The flow and viscosity of the coating composition may be influenced by selection of the solvents, while the evaporation behaviour of the coating composition may be influenced by the boiling point of the solvent mixture used.

The polymer dispersion used in the invention may contain one or more inorganic and/or organic color- or special-effect imparting pigments and optionally, additionally extenders. Examples of special effect-imparting pigments are metal pigments, such as aluminum, copper or other metal pigments, interference pigments, such as, for example, metal oxide coated metal pigments, coated mica and graphite special effect pigments. Examples of color-imparting pigments and extenders are titanium dioxide, iron oxide pigments, carbon black, silicon dioxide, barium sulfate, talcum, kaolin, chalk, azo pigments, phthalocyanine pigments. Many of these pigments can be incorporated into the coating compositions using conventional methods. Special effect-imparting pigments can be incorporated, for example in the form of a conventional commercial aqueous or non-aqueous paste. Colorants or extenders, can be incorporated, for example with grinding in a proportion of the aqueous binder, wherein grinding may also be performed in a special, water-dilutable paste resin.

A coating material based on the polymer dispersion and fiber material according to the invention comprises:
A) 5 to 40 wt.% of a polymer dispersion based on one or more polymers of polyurethanes, polyester polyurethanes and polyesters, with a solids content of 25 to 90 wt.%,
B) 0 to 35 wt.% of one or more cross-linking agents, selected from the group of formaldehyde condensation resins and polyisocyanates,
C) 2 to 20 wt.% of fiber material,
D) 0 to 20 wt.% of solvent
E) 5 to 35 wt.% of water and, optionally,
F) 0.5 to 10 wt.% of additives conventionally used in connection with coatings, pigments and/or extenders.

The coating material according to the invention may be applied using conventional methods, preferably being applied by spraying to a dry film thickness of 8 to 500 µm. Application is preferably performed using the wet-on-wet process with drying or cross-linking at temperatures, for example, of 20 to 140°C.

The coating material according to the invention may be used in multi-layer coatings and may be overcoated, for example, with transparent clear coats. Suitable clear coats are in principle any known clear coats or transparently pigmented coating compositions. The coating composition used in this invention may be used as a clear coat with or without the use of transparent pigments. Not only solvent-containing one- or two-component coating compositions, but also water-dilutable clear coats, powder clear coats or radiation-curable clear coats may be used.

The multi-layer coatings may be applied onto the substrates in various manners. Plastics substrates may, for example, be provided with a plastics primer, onto which the polymer dispersion according to the invention is applied and cured. The polymer dispersion according to the invention may also be applied wet-on-wet onto uncross-linked filler layers and then be baked together with the filler layer, generally prior to application of a clear top coat.

It is also possible to apply the coating material according to the invention directly, without further interlayers, onto the substrate.

The coating material according to the invention may also be used as an aqueous top coat in multi-layer coatings, for example applied onto a color-imparting base coat. Suitable base coats are in principle any known base coats. Not only solvent-containing one- or two-component coating compositions, but also water-dilutable base coats or radiation-curable base coats may be used. Such multilayer coatings may likewise be applied onto the substrates in various manners. Plastics substrates may be provided with a plastics primer, onto which the base coat layer is applied and cured. The base coat may also be applied wet-on-wet onto uncross-linked filler coats, then baked together with the filler coat, generally prior to application of a clear top coat, whereupon the polymer dispersion according to the invention may then be applied and cured.

Suitable substrates for coating with the coating material according to the invention are substrates made from metal, plastics, concrete, wood and films (plastics films, paper sheets), in particular plastics automotive parts, in particular plastics parts for automotive interiors.

Very good interlayer adhesion is achieved in the production of multi-layer structures. The multi-layer coatings according to the invention meet conventional present-day requirements placed upon automotive coatings, in particular in coating plastics, in particular coatings automotive parts.

The invention furthermore relates to a substrate coated with the coating material according to the invention, optionally in conjunction with a multilayer system, and drying or curing of the coating on the substrate.

The multi-layer system may be obtained by applying at least one primer coat, preferably based on a water-dilutable coating composition, applying a color-imparting base coat layer comprising the coating material according to the invention, optionally drying the base coat and applying a transparent coating composition as top coat and subsequently heating the coated substrate. Further additional layers may optionally be added to this multi-layer coating. The primer coat may also be omitted.

The multi-layer system may also be obtained by applying at least one primer coat, preferably based on a water-dilutable coating composition, applying a conventional color-imparting base coat layer, optionally drying the base coat and applying a transparent coating composition comprising the coating material according to the invention as the top coat and subsequently heating the coated substrate. Further additional layers may optionally be added to this multi-layer coating. The primer coat may also be omitted.

The multi-layer coating according to the invention exhibits a good surface with very good interlayer adhesion. In particular, using the coating material according to the invention, it is possible to achieve a surface finish with a pleasantly soft appearance, which finish is in particular suitable for surface finishing automotive plastics parts in automotive interiors. Furthermore, the substrate treated with the multi-layer coating meets conventional present-day requirements for plastics coating, in particular for plastics parts in automotive interiors, the multi-layer coating for example exhibits outstanding resistance to condensation and exhibits no loss of adhesion.

Substrates coated using the process according to the invention may be used for the most varied purposes. For example, it is possible to use the process according to the invention to coat substrates that are used for insulation purposes, i.e. for acoustic as well as thermal insulation. The process according to the invention may furthermore be used to equip the substrates in accordance with various requirements with regard to acoustic properties, for example in order to achieve certain acoustic behaviour. Finally, the process according to the invention may be used to provide an attractive, decorative finish on substrate surfaces and to achieve certain tactile properties, for example a soft appearance. The substrates coated using the process according to the invention are readily cleanable and are very durable, i.e. exhibit an extended service life of the coating while retaining the desired properties.

The following example illustrates the invention. All parts and percentages are on a weight basis unless otherwise indicated.

### Example

To a given OH-functional polyurethane dispersion of 30 wt.% on the basis of Bayhydrol® LS 2305, add while stirring 3 wt.% of de-aerator, 6 wt.% of a polysiloxane solution as flow promoting agent, 20 wt.% of the OH-functional polyurethane dispersion on the basis of Bayhydrol® LS 2305, and 3 wt.% of an acrylate thickener. After a homogeneous mixture has been obtained, 15 % of viscose fibers of 0.5 to 2 mm length, are sprinkled into this mixture in portions. To adjust the viscosity of he mixture, 15 wt.% of deionized water are added while stirring. Subsequently the material is homogenized for about 20 minutes.

Exactly before the application process, 15 wt.% of a HDI-solution (hexamethylene diisocyanate solution) as curing agent (solids content: 12 to 25 wt. %) are added to the above prepared polyurethane dispersion component for homogenization within 10 minutes at 1000 rpm.

Subsequently the application process takes place by means of 3 to 4 cross-coat spraying steps on a plastic surface.

A coating having a felt-like surface and having a smooth as well as a stable appearance was obtained and there was no release of fibers from the surface of the coating.

## Claims

1. Process for coating a surface of a substrate, comprising the steps of
a) coating fiber material with a polymer dispersion based on at least one polymer selected from the group consisting of polyurethanes, polyester urethanes, polyesters and mixtures thereof to form coated fibers,
b) blending the coated fiber material with the polymer dispersion to form a coating material comprising
1) 5 to 40 wt.% of the polymer dispersion, having a solids content of 25 to 90 wt.%, based on at least one polymer selected from the group consisting of polyurethanes; polyester polyurethanes; polyesters; and mixtures thereof,
2) 0 to 35 wt.% of at least one cross-linking agent selected from the group consisting of formaldehyde condensation resins and polyisocyanates,
3) 2 to 20 wt.% of the coated fiber material,
4) 0 to 20 wt.% of a solvent,
5) 5 to 35 wt.% of water, and optionally
6) 0.5 to 10 wt.% of compositions selected from the group consisting of coating additives; pigments; extenders; and mixtures thereof;
c) applying the coating material onto the surface of the substrate; and
d) curing the coating material to form a textured surface on the substrate.

2. The process according to claim 1 wherein the polymer is a polyurethane.

3. The process according to claim 1 to 2 wherein the fiber material is selected from the group consisting of polyacryl fibers, viscose fibers, cotton fibers and polypropylene fibers.

4. Process for forming multiple layers of coating on a substrate comprising the steps of applying a base coat layer and a clear coat layer and curing said layers, wherein at least one layer comprises a coating composition consisting essentially of
a) 5 to 40 wt.% of a polymer dispersion, having a solids content of 25 to 90 wt.%, based on at least one polymer selected from the group consisting of polyurethanes; polyester polyurethanes; polyesters; and mixtures thereof,
b) 0 to 35 wt.% of at least one cross-linking agent selected from the group consisting of formaldehyde condensation resins and polyisocyanates,
c) 2 to 20 wt.% of fiber material coated with the polymer dispersion,
d) 0 to 20 wt.% of solvent,
e) 5 to 35 wt.% of water, and optionally
f) 0.5 to 10 wt.% of compositions selected from the group consisting of coating additives; pigments; extenders; and mixtures thereof.

5. The process according to claim 4 wherein the polymer is a polyurethane.

6. The process according to claim 4 wherein the fiber material is selected from the group consisting of polyacryl fibers, viscose fibers, cotton fibers and polypropylene fibers.

7. The process according to claim 4 wherein the coating composition comprises a base coat containing 0.5 to 10 wt.% pigment.

8. The process according to claim 4 wherein the coating composition comprises a clear coat.

9. The process according to claim 8 wherein the clear coating composition contains 0.5 to 10 wt.% of transparent pigment.

10. The process according to claim 1 to 9 wherein the substrate is selected from the group consisting of metals, plastics, concrete, wood, plastic films, and paper films.

11. A substrate coated and cured by the process according to claim 1 to 10, wherein the substrate is a plastic part of the interior of an automobile.

## Patentansprüche

1. Verfahren zur Beschichtung einer Oberfläche eines Substrats mit den folgenden Schritten:
a) Beschichten von Fasermaterial mit einer Polymerdispersion auf der Basis mindestens eines Polymers, das aus der Gruppe ausgewählt ist, die aus Polyurethanen, Polyesterurethanen, Polyestern und Gemischen daraus besteht, zur Bildung von beschichteten Fasern,
b) Vermischen des beschichteten Fasermaterials mit der Polymerdispersion zur Bildung eines Beschichtungsmaterials, das aufweist:
1) 5 bis 40 Gew.-% der Polymerdispersion mit einem Feststoffgehalt von 25 bis 90 Gew.-% auf der Basis mindestens eines Polymers, das aus der Gruppe ausgewählt ist, die aus Polyurethanen, Polyesterpolyurethanen, Polyestern und Gemischen daraus besteht,
2) 0 bis 35 Gew.-% mindestens eines Vernetzungsmittels, das aus der Gruppe ausgewählt ist, die aus Formaldehydkondensationsharzen und Polyisocyanaten besteht,
3) 2 bis 20 Gew.-% des beschichteten Fasermaterials,
4) 0 bis 20 Gew.-% eines Lösungsmittels,
5) 5 bis 35 Gew.-% Wasser, und wahlweise
6) 0,5 bis 10 Gew.-% Zusammensetzungen, die aus der Gruppe ausgewählt sind, die aus Beschichtungszusätzen, Pigmenten, Streckmitteln und Gemischen daraus besteht;
c) Auftragen des Beschichtungsmaterials auf die Oberfläche des Substrats; und
d) Härten des Beschichtungsmaterials zur Bildung einer texturierten Oberfläche auf dem Substrat.

2. Verfahren nach Anspruch 1, wobei das Polymer Polyurethan ist.

3. Verfahren nach Anspruch 1 bis 2, wobei das Fasermaterial aus der Gruppe ausgewählt ist, die aus Polyacrylfasern, Viskosefasern, Baumwollfasern und Polypropylenfasern besteht.

4. Verfahren zur Bildung von mehrfachen Überzugsschichten auf einem Substrat mit den folgenden Schritte: Auftragen einer Grundlackschicht und einer Klarlackschicht und Härten der Schichten, wobei mindestens eine Schicht eine Beschichtungszusammensetzung aufweist, die im wesentlichen aus den folgenden Komponenten besteht:
a) 5 bis 40 Gew.-% einer Polymerdispersion mit einem Feststoffgehalt von 25 bis 90 Gew.-% auf der Basis mindestens eines Polymers, das aus der Gruppe ausgewählt ist, die aus Polyurethanen, Polyesterpolyurethanen, Polyestern und Gemischen daraus besteht,
b) 0 bis 35 Gew.-% mindestens eines Vernetzungsmittels, das aus der Gruppe ausgewählt ist, die aus Formaldehydkondensationsharzen und Polyisocyanaten besteht,
c) 2 bis 20 Gew.-% mit der Polymerdispersion beschichtetes Fasermaterial,
d) 0 bis 20 Gew.-% Lösungsmittel,
e) 5 bis 35 Gew.-% Wasser, und wahlweise
f) 0,5 bis 10 Gew.-% Zusammensetzungen, die aus der Gruppe ausgewählt sind, die aus Beschichtungszusätzen, Pigmenten, Streckmitteln und Gemischen daraus besteht.

5. Verfahren nach Anspruch 4, wobei das Polymer ein Polyurethan ist.

6. Verfahren nach Anspruch 4, wobei das Fasermaterial aus der Gruppe ausgewählt ist, die aus Polyacrylfasern, Viskosefasern, Baumwollfasern und Polypropylenfasern besteht.

7. Verfahren nach Anspruch 4, wobei die Beschichtungszusammensetzung eine Grundlackschicht aufweist, die 0,5 bis 10 Gew.-% Pigment enthält.

8. Verfahren nach Anspruch 4, wobei die Beschichtungszusammensetzung eine Klarlackschicht aufweist.

9. Verfahren nach Anspruch 8, wobei die Klarlackzusammensetzung 0,5 bis 10 Gew.-% transparentes Pigment enthält.

10. Verfahren nach Anspruch 1 bis 9, wobei das Substrat aus der Gruppe ausgewählt ist, die aus Metallen, Kunststoffen, Beton, Holz, Kunststofffolien und Papierfolien besteht.

11. Durch das Verfahren nach Anspruch 1 bis 10 beschichtetes und gehärtetes Substrat, wobei das Substrat ein Kunststoffteil des Innenraums eines Kraftfahrzeugs ist.

## Revendications

1. Procédé pour revêtir une surface d'un substrat, comprenant les étapes consistant
a) à revêtir un matériau fibreux avec une dispersion polymère basée sur au moins un polymère choisi dans le groupe constitué par les polyuréthanes, les polyester uréthanes, les polyesters et des mélanges de ceux-ci, pour former des fibres revêtues,
b) à mélanger le matériau fibreux revêtu avec la dispersion polymère pour former un matériau de revêtement comprenant
1) 5 à 40% en poids de la dispersion polymère, ayant une teneur en substances solides de 25 à 90 % en poids, basée sur au moins un polymère choisi dans le groupe constitué par les polyuréthanes; les polyester uréthanes; les polyesters; et des mélanges de ceux-ci;
2) 0 à 35% en poids d'au moins un agent de réticulation choisi dans le groupe constitué par les résines de condensation de type formaldéhyde et les polyisocyanates,
3) 2 à 20% en poids du matériau fibreux revêtu,
4) 0 à 20% en poids d'un solvant,
5) 5 à 35% en poids d'eau et, facultativement
6) 0,5 à 10% en poids de compositions choisies dans le groupe constitué par les additifs de revêtement; les pigments; les allonges; et des mélanges de ceux-ci;
c) à appliquer le matériau de revêtement sur la surface du substrat; et
d) à durcir le matériau de revêtement pour former une surface texturée sur le substrat.

2. Procédé selon la revendication 1, dans lequel le polymère est un polyuréthane.

3. Procédé selon la revendication 1 ou 2, dans lequel le matériau fibreux est choisi dans le groupe constitué par les fibres polyacryliques, les fibres de viscose, les fibres de coton et les fibres de polypropylène.

4. Procédé pour former de multiples couches de revêtement sur un substrat, comprenant les étapes consistant à appliquer une couche de revêtement de base et une couche de revêtement transparente et à durcir lesdites couches, dans lequel au moins une couche comprend une composition de revêtement consistant essentiellement en
a) 5 à 40% en poids d'une dispersion polymère, ayant une teneur en substances solides de 25 à 90 % en poids, basée sur au moins un polymère choisi dans le groupe constitué par les polyuréthanes; les polyester uréthanes; les polyesters; et des mélanges de ceux-ci;
b) 0 à 35% en poids d'au moins un agent de réticulation choisi dans le groupe constitué par les résines de condensation de type formaldéhyde et les polyisocyanates,
c) 2 à 20% en poids de matériau fibreux revêtu avec la dispersion polymère,
d) 0 à 20% en poids de solvant,
e) 5 à 35% en poids d'eau et, facultativement
f) 0,5 à 10% en poids de compositions choisies dans le groupe constitué par les additifs de revêtement; les pigments; les allonges; et des mélanges de ceux-ci.

5. Procédé selon la revendication 4, dans lequel le polymère est un polyuréthane.

6. Procédé selon la revendication 4, dans lequel le matériau fibreux est choisi dans le groupe constitué par les fibres polyacryliques, les fibres de viscose, les fibres de coton et les fibres de polypropylène.

7. Procédé selon la revendication 4, dans lequel la composition de revêtement comprend une couche de base contenant 0,5 à 10% en poids de pigment.

8. Procédé selon la revendication 4, dans lequel la composition de revêtement comprend une couche transparente.

9. Procédé selon la revendication 8, dans lequel la composition de revêtement transparente contient 0,5 à 10% en poids de pigment transparent.

10. Procédé selon la revendication 1 à 9, dans lequel le substrat est choisi dans le groupe constitué par les métaux, les matières plastiques, le béton, le bois, les films plastiques et les films de papier.

11. Substrat revêtu et durci par le procédé selon la revendication 1 à 10, dans lequel le substrat est une pièce plastique de l'intérieur d'une automobile.
